# EUROPEAN PATENT APPLICATION

(11) **EP 4 765 469 A1**
(43) Date of publication of application: **24.06.2026**
(21) Application number: 24853628.6
(22) Date of filing: 07.08.2024
(51) Int. Cl.: H01M 50/691, H01M 50/244, H01M 50/249, H01M 50/24

(54) **BOTTOM GUARD, BATTERY PACK, AND VEHICLE**

(30) Priority: 16.08.2023 CN 202322218010 U
(71) Applicant: BYD Company Limited, Shenzhen, Guangdong 518118 (CN)
(72) Inventor: KUANG, Binbin, Shenzhen, Guangdong 518118 (CN); CAO, Dongkui, Shenzhen, Guangdong 518118 (CN); HUANG, Jian, Shenzhen, Guangdong 518118 (CN); ZHANG, Hongwei, Shenzhen, Guangdong 518118 (CN); MENG, Shengyong, Shenzhen, Guangdong 518118 (CN)
(74) Representative: Mathys & Squire
(86) International application number: PCT/CN2024/110303
(87) International publication number: WO 2025/036217

(57) **Abstract**

A vehicle is provided. The vehicle includes a battery pack. The battery pack includes an underbody protection plate. The underbody protection plate includes an underbody protection plate body. The underbody protection plate body is provided with a liquid discharge channel. At least one channel opening in communication with the outside is formed on the underbody protection plate body. The channel opening is in communication with the liquid discharge channel.

## Description

### CROSS-REFERENCE TO RELATED APPLICATIONS

This application claims priority to Chinese Patent Application No. 202322218010.X, filed with the China National Intellectual Property Administration on August 16, 2023 and entitled "UNDERBODY PROTECTION PLATE, BATTERY PACK, AND VEHICLE", which is incorporated herein by reference in its entirety.

### TECHNICAL FIELD

This application relates to the field of battery technologies, and in particular, to an underbody protection plate, a battery pack, and a vehicle.

### BACKGROUND

With rapid development of the new energy vehicle market, safety performance of battery packs that are one of the power sources of new energy vehicles directly affects vehicle performance and driving experience. In related technologies, a battery pack is usually arranged at the bottom of the vehicle body of an entire vehicle. However, ground clearance of the battery pack is limited, and the underbody protection plate is disposed at the bottom of the battery pack. This means that during driving, when the vehicle passes through puddles or when it rains, water usually enters the underbody protection plate and accumulates. This leads to a problem that the bottom of a tray is corroded, water degrades and produces an odor because the accumulated water is not drained for a long time, resulting in customer complaints and the like.

### SUMMARY

This application is intended to solve at least one of the technical problems existing in the related technologies. Therefore, a first objective of this application is to provide an underbody protection plate that can improve structural strength of the underbody protection plate and reduce risk of water accumulation on the underbody protection plate.

A second objective of this application is to provide a battery pack that includes the underbody protection plate described in the foregoing embodiment.

A third objective of this application is to provide a vehicle that includes the battery pack described in the foregoing embodiment.

An underbody protection plate according to an embodiment of a first aspect of this application includes: an underbody protection plate body, wherein the underbody protection plate body is provided with a liquid discharge channel, at least one channel opening in communication with the outside is formed in the underbody protection plate body, and the channel opening is in communication with the liquid discharge channel.

In the underbody protection plate according to this embodiment of this application, the liquid discharge channel and the channel opening are provided on the underbody protection plate body, so that liquid entering the underbody protection plate can be quickly discharged, which prevents water accumulated in the underbody protection plate from contacting a tray and causing corrosion of the tray, and reduces the possibility of odor emission caused by long-term water accumulation. In addition, the underbody protection plate can increase protection of the battery pack, reduce impact of foreign objects or hard objects on the battery pack during driving, protect the battery pack, and reduce operating costs.

In some embodiments, the underbody protection plate body includes: a bottom wall and a sidewall, wherein the sidewall is disposed on outer periphery of the bottom wall, the sidewall extends in a first direction toward a direction away from the bottom wall, the sidewall protrudes from the bottom wall toward a second direction, the second direction is perpendicular to the first direction, the sidewall and the bottom wall jointly define the liquid discharge channel, and at least one portion of the sidewall is broken to form the channel opening.

In some embodiments, the bottom wall is provided with a protrusion structure. The protrusion structure is spaced apart from the sidewall. The protrusion structure is formed by a portion of the bottom wall that protrudes toward the second direction.

In some embodiments, the liquid discharge channel includes a first liquid discharge channel, wherein the first liquid discharge channel is provided between the sidewall and the protrusion structure. The channel opening includes a first channel opening. The first channel opening includes at least one notch on the sidewall.

In some embodiments, the protrusion structure includes: at least one first protrusion, wherein the first protrusion extends in a circumferential direction of the bottom wall.

In some embodiments, the liquid discharge channel includes a second liquid discharge channel, wherein the second liquid discharge channel is provided in a space encircled by the first protrusion, the channel opening including a second channel opening, the second channel opening including at least one notch of the first protrusion, and the second channel opening being in communication with the first liquid discharge channel and the second liquid discharge channel.

In some embodiments, the protrusion structure further includes: at least one second protrusion, wherein the second protrusion extends in a circumferential direction of the bottom wall, and the second protrusion is disposed between the first protrusion and the sidewall.

In some embodiments, the liquid discharge channel includes a third liquid discharge channel, wherein the third liquid discharge channel is provided between the second protrusion and the first protrusion, the channel opening includes a third channel opening, the third channel opening includes at least one notch of the second protrusion, and the third channel opening is in communication with the first liquid discharge channel and the third liquid discharge channel.

In some embodiments, the protrusion structure further includes: a third protrusion, wherein the third protrusion extends in a first direction, the third protrusion intersects with the first protrusion and/or the second protrusion; and/or, the third protrusion extends in a third direction, the third protrusion intersects with the first protrusion and/or the second protrusion, and the first direction, the second direction, and the third direction are orthogonal to each other.

In some embodiments, the protrusion structure further includes: a fourth protrusion, wherein the fourth protrusion intersects with the first protrusion and/or the third protrusion; or the fourth protrusion intersects with the second protrusion and the third protrusion; or the fourth protrusion intersects with the first protrusion, the second protrusion, and the third protrusion.

In some embodiments, the underbody protection plate body is rectangular. There are a plurality of first channel openings. The plurality of first channel openings include a first sub-channel opening and a second sub-channel opening. The first sub-channel opening and the second sub-channel opening are respectively located on same ends of two opposite sides of the sidewall.

In some embodiments, an edge of the underbody protection plate body is provided with at least one connecting portion, and the connecting portion is configured to connect to a protective plate at the bottom of a vehicle.

In some embodiments, the underbody protection plate further includes: a thermal insulation member, wherein the thermal insulation member is disposed on a first side of the underbody protection plate body in the second direction.

In some embodiments, the underbody protection plate further includes: a buffer layer, wherein the buffer layer is disposed on a second side of the underbody protection plate body in the second direction, and the second side and the first side are respectively located on two sides of the underbody protection plate body in the second direction.

In some embodiments, the buffer layer is sprayed onto the second side of the underbody protection plate body.

A battery pack according to an embodiment of a second aspect of this application includes: a tray and an underbody protection plate, wherein the underbody protection plate is the underbody protection plate as described in any one of the foregoing embodiments, the underbody protection plate is disposed at the bottom of the tray, and a side, on which the liquid discharge channel is located, of the underbody protection plate body of the underbody protection plate faces the tray.

A vehicle according to an embodiment of a third aspect of this application includes the battery pack described in the foregoing embodiments.

Additional aspects and advantages of this application are set forth in part in the following description, and in part become apparent from the following description, or may be learned through the practice of This application.

### BRIEF DESCRIPTION OF DRAWINGS

The foregoing and/or additional aspects and advantages of this application will become apparent and readily understood from the description of embodiments taken in conjunction with the following accompanying drawings, in which:
FIG. 1 is a diagram of a battery pack according to an embodiment of this application;
FIG. 2 is a diagram of an underbody protection plate according to an embodiment of this application;
FIG. 3 is a diagram of an underbody protection plate body according to an embodiment of this application;
FIG. 4 is a bottom view of a battery pack according to an embodiment of this application;
FIG. 5 is a diagram of mounting of an underbody protection plate and a protective plate according to an embodiment of this application; and
FIG. 6 is a block diagram of a vehicle according to an embodiment of this application.

### Reference numerals:

vehicle 1000;
battery pack 100, underbody protection plate 1, tray 2, protective plate 3
underbody protection plate body 10, liquid discharge channel 11, channel opening 120, first liquid discharge channel 111, second liquid discharge channel 112, third liquid discharge channel 113, first channel opening 12, first sub-channel opening 121, second sub-channel opening 122, bottom wall 13, sidewall 14, protrusion structure 15, first protrusion 151, second protrusion 152, third protrusion 153, fourth protrusion 154, connecting portion 16,
thermal insulation member 20, buffer layer 30.

### DESCRIPTION OF EMBODIMENTS

Embodiments of this application are described in detail below. Embodiments described with reference to the accompanying drawings are exemplary.

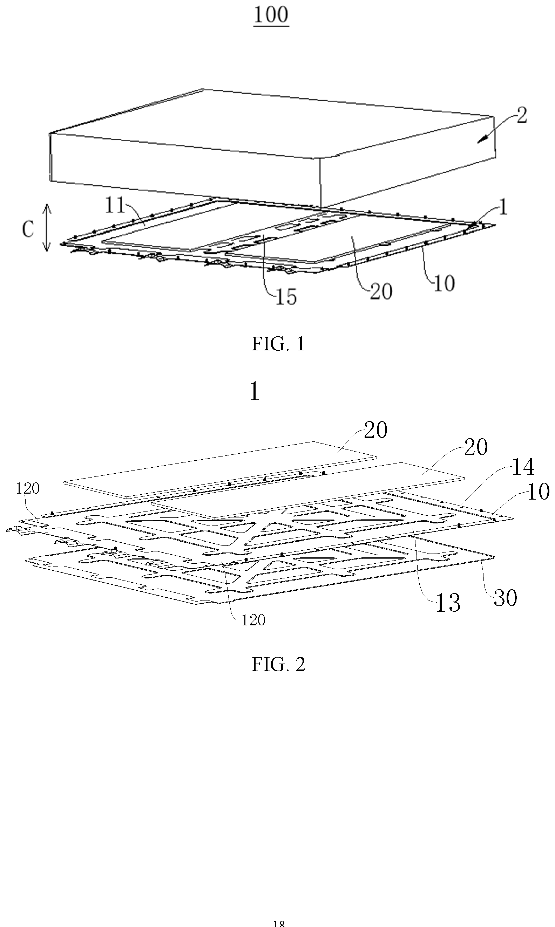

An underbody protection plate 1 according to an embodiment of this application is described below with reference to FIG. 1 to FIG. 5, including an underbody protection plate body 10. The underbody protection plate 1 has a first direction A, a second direction C, and a third direction B. The first direction A corresponds to a length direction of the underbody protection plate 1. The second direction C corresponds to a height direction of the underbody protection plate 1. The third direction B corresponds to a width direction of the underbody protection plate 1.

Specifically, as shown in FIG. 1 to FIG. 4, the underbody protection plate body 10 is provided with a liquid discharge channel 11. At least one channel opening 120 in communication with the outside is formed on the underbody protection plate body 10. The channel opening 120 is in communication with the liquid discharge channel 11.

In this embodiment, the underbody protection plate 1 located at the bottom of a tray 2 of the battery pack 100 is used as an example. The underbody protection plate 1 is located at the bottom of the tray 2 and can be connected to the tray 2 by a bolt. The underbody protection plate 1 is used to protect the battery pack 100. A liquid discharge channel 11 is disposed on a side of the underbody protection plate body 10. Here, it means that the underbody protection plate 1 is provided with the liquid discharge channel 11 on a side adjacent to the tray 2 in the second direction C (that is, a thickness direction of the underbody protection plate 1). When a vehicle travels through water, it is easy for water to enter the underbody protection plate 1 located at the bottom of the vehicle. The water in the underbody protection plate 1 collects in the liquid discharge channel 11 and is promptly discharged from the channel opening 120, which keeps the inner side of the underbody protection plate 1 dry, and prevents long-term water accumulation from corroding the bottom of the tray 2.

In the underbody protection plate 1 according to this embodiment of this application, the liquid discharge channel 11 and the channel opening 120 are provided on the underbody protection plate body 10, so that liquid entering the underbody protection plate 1 can be quickly discharged, which prevents water accumulated in the underbody protection plate 1 from contacting the tray 2 and causing corrosion of the tray 2, and reduces the possibility of odor emission caused by long-term water accumulation. In addition, the underbody protection plate 1 can increase protection of the battery pack 100, reduce impact of foreign objects or hard objects on the battery pack 100 during driving, protect the battery pack 100, and reduce operating costs.

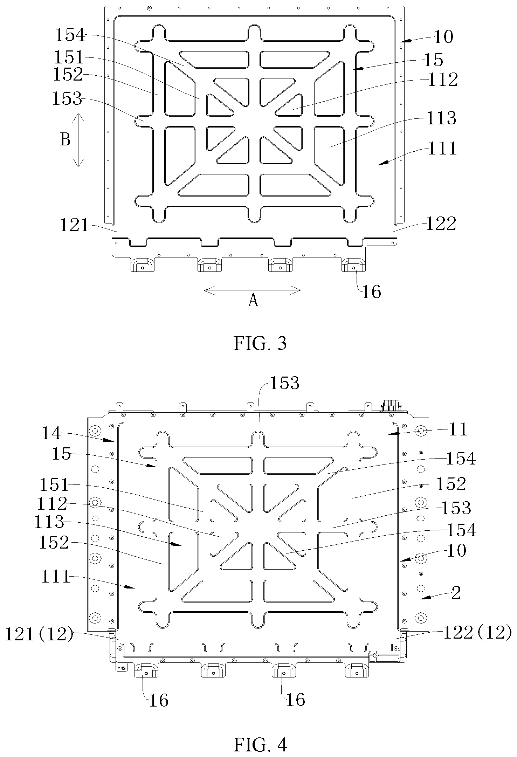

In some embodiments, as shown in FIG. 2 and FIG. 3, the underbody protection plate body 10 includes: a bottom wall 13 and a sidewall 14. The sidewall 14 is disposed on an outer periphery of the bottom wall 13. The sidewall 14 extends in the first direction A toward a direction away from the bottom wall 13 and the sidewall 14 protrudes from the bottom wall 13 toward the second direction C. The first direction A is perpendicular to the second direction C. The sidewall 14 and the bottom wall 13 jointly define a liquid discharge channel 11. At least one portion of the sidewall 14 is broken to form the channel opening 120.

The underbody protection plate body 10 has a first direction A, a second direction C, and a third direction B. The first direction A may be a left-right direction of the vehicle. The second direction C may be a height direction of the vehicle. The third direction B may be a front-rear direction of the vehicle. The two sidewalls 14 in the first direction A extend toward a direction away from each other and protrude from the bottom wall 13. The sidewall 14 in the third direction B extends toward a direction away from the center of the bottom wall 13. The sidewalls 14 extending in the first direction A and the third direction B are connected. The channel opening 120 in communication with the liquid discharge channel 11 is formed on the sidewall 14, enabling liquid in the liquid discharge channel 11 to flow out promptly. Therefore, the bottom wall 13 and the sidewall 14 define the liquid discharge channel 11, which facilitates collection of liquid in the underbody protection plate 1 at the liquid discharge channel 11, and promotes outflow of the liquid accumulated in the underbody protection plate 1 through the channel opening 120. In addition, the sidewall 14 extending in the first direction A facilitates mounting of the underbody protection plate 1, and the sidewall 14 protruding from the bottom wall 13 in the second direction C facilitates formation of the liquid discharge channel 11.

In some embodiments, as shown in FIG. 4, a protrusion structure 15 is disposed on the bottom wall 13, and the protrusion structure 15 is spaced apart from the sidewall 14. Therefore, the protrusion structure 15 is disposed on the bottom wall 13 of the underbody protection plate 1, so that structural strength of the underbody protection plate 1 can be increased, and an area of water accumulation on the underbody protection plate 1 can be reduced, which facilitates flow of the accumulated water to the liquid discharge channel 11, reduces the possibility of the accumulated water contacting the bottom of the tray 2, and prevents the accumulated liquid from corroding the tray 2. When the underbody protection plate 1 is mounted on the bottom of the tray 2, the protrusion structure 15 can abut against the bottom of the tray 2, which prevents water from entering the protrusion structure 15, and effectively reduces an odor problem caused by water accumulation on the bottom wall 13.

In some embodiments, the protrusion structure 15 is formed by a portion of the bottom wall 13 that protrudes toward the second direction C. For example, two sides of the underbody protection plate 1 in the thickness direction are the first side and the second side, respectively. The sidewalls 14 are disposed on the first side of the bottom wall 13 and extend away from the second side toward the second direction C, namely the height direction. The protrusion structure 15 is formed by protruding from the second side of the underbody protection plate 1 toward the first side in the thickness direction. Therefore, the protrusion structure 15 protrudes toward the second direction C, which can increase the ground clearance of the bottom wall 13 on a side of the bottom wall 13 that is away from the sidewall 14, preventing the underbody protection plate 1 from deforming and puncturing the battery pack 100 due to impact of a foreign object, increasing use safety and structural strength of the underbody protection plate 1, and ensuring passability of a vehicle having the underbody protection plate 1.

In some embodiments, as shown in FIG. 3 and FIG. 4, the liquid discharge channel 11 includes a first liquid discharge channel 111. The first liquid discharge channel 111 is provided between the sidewall 14 and the protrusion structure 15. The first liquid discharge channel 111 is an annular channel provided in the underbody protection plate body 10. The channel opening 120 includes a first channel opening 12. The first channel opening 12 includes at least one notch on the sidewall 14. For example, a notch formed at a joint of the sidewall 14 disposed in the first direction A and the sidewall 14 disposed in the third direction B is the first channel opening 12, and the first channel opening 12 is located on the sidewall 14 disposed in the first direction A, or the first channel opening 12 is formed in at least one of the two opposite sidewalls 14 in the first direction A, so that the first channel opening 12 is in communication with the first liquid discharge channel 111. After liquid enters the underbody protection plate body 10, the liquid can be collected in the liquid discharge channel 11 and then flow out from the first channel opening 12, avoiding liquid accumulation in the underbody protection plate 1 and avoiding corrosion and odor generation in the underbody protection plate 1.

With reference to FIG. 4, the protrusion structure 15 includes: at least one first protrusion 151. The first protrusion 151 annularly extends in a circumferential direction of the bottom wall 13. The first protrusion 151 is designed in a nested square shape on the bottom wall 13. Therefore, disposing of the first protrusion 151 can increase structural strength of the bottom wall 13 and improve resistance to impact deformation of the underbody protection plate 1, so that the underbody protection plate 1 better protects the tray 2.

In some embodiments, the liquid discharge channel 11 includes a second liquid discharge channel 112. The second liquid discharge channel 112 is provided in a space surrounded by the first protrusion 151, that is, a region enclosed by the first protrusion 151 and the bottom wall 13 is configured as the second liquid discharge channel 112. The channel opening 120 includes a second channel opening (not shown in the figure), the second channel opening includes at least one notch of the first protrusion 151, and the second channel opening may be in communication with the first liquid discharge channel 111 and the second liquid discharge channel 112. The second channel opening can be provided on the first protrusion 151 and on a first protrusion 151 of the two first protrusions 151 that is adjacent to the sidewall 14, so that the first liquid discharge channel 111 can be in communication with the second liquid discharge channel 112. In this way, any accumulated liquid in the second liquid discharge channel 112 can flow out, and the second liquid discharge channel 112 defined between the two first protrusions 151 keeps dry. Thus, a plurality of first protrusions 151 are spaced apart on the bottom wall 13, and the second liquid discharge channel 112 is located between two first protrusions 151, which can increase structural strength of the bottom wall 13. In addition, disposing of the second channel opening enables the first liquid discharge channel 111 to be in communication with the second liquid discharge channel 112, increasing a rate at which the liquid flows out of the second liquid discharge channel 112.

Optionally, with reference to FIG. 4, the protrusion structure 15 further includes: at least one second protrusion 152. The second protrusion 152 annularly extends in a circumferential direction of the bottom wall 13, and the second protrusion 152 is disposed between the first protrusion 151 and the sidewall 14. The second protrusion 152 is arranged in a nested square shape. The second protrusion 152 on the bottom wall 13 is located on an outer periphery of the first protrusion 151 in a direction away from the center of the bottom wall 13, and is spaced apart from the first protrusion 151. Therefore, structural strength of the bottom wall 13 can be increased by disposing the second protrusion 152. This configuration, in combination with the first protrusion 151, improves stability of the protrusion structure 15.

In some embodiments, as shown in FIG. 3, the liquid discharge channel 11 includes a third liquid discharge channel 113. The third liquid discharge channel 113 is provided between the second protrusion 152 and the first protrusion 151. The channel opening 120 includes a third channel opening (not shown in the figure). The third channel opening includes at least one notch of the second protrusion 152, that is, a notch is formed on the second protrusion 152. The notch is the third channel opening. There may be a plurality of notches. The third channel opening may be in communication with the first liquid discharge channel 111 and the third liquid discharge channel 113. That is, the second protrusion 152 is located between the first protrusion 151 and the sidewall 14. The third liquid discharge channel 113 is provided between the second protrusion 152 and the sidewall 14. The third channel opening is provided on the second protrusion 152. When liquid entering the third liquid discharge channel 113 needs to be discharged, the liquid can flow out from the third channel opening to the first liquid discharge channel 111, and then flow out from the first channel opening 12 after being collected.

In this embodiment, the first protrusion 151 and the second protrusion 152 can be provided simultaneously. That is, due to disposing of the protrusion structure 15, the first liquid discharge channel 111, the second liquid discharge channel 112, and the third liquid discharge channel 113 can be formed in the underbody protection plate 1, the first liquid discharge channel 111 is in communication with the third liquid discharge channel 113 via the third channel opening, and the second liquid discharge channel 112 is in communication with the third liquid discharge channel 113 via the second channel opening, so that accumulated liquid in the protrusion structure 15 can flow to the first liquid discharge channel 111, and be collected and discharged.

Further, as shown in FIG. 3, the protrusion structure 15 further includes: a third protrusion 153. The third protrusion 153 extends in the first direction A. The third protrusion 153 intersects with the first protrusion 151 and/or the second protrusion 152, that is, the third protrusion 153 extends in the first direction A and separately intersects with the first protrusion 151 that is annular and the second protrusion 152 that is annular, and the third protrusion 153 protrudes from an edge of the second protrusion 152. Alternatively, the third protrusion 153 extends out of an edge of the first protrusion 151 in the first direction A and is spaced apart from the second protrusion 152. In this case, two ends of the third protrusion 153 are located between the first protrusion 151 and the second protrusion 152. Alternatively, the third protrusion 153 is spaced apart from the first protrusion 151 in the first direction A. In this case, the third protrusion 153 extends in the first direction A, and when the third protrusion 153 is connected to the first protrusion 151 and the second protrusion 152, the first protrusion 151 and the second protrusion 152 are symmetrically distributed about the first protrusion 151 in the third direction B.

The third protrusion 153 extends in the third direction B. The third protrusion 153 intersects with the first protrusion 151 and/or the second protrusion 152. The first direction A, the second direction C, and the third direction B are orthogonal to each other. In this case, the third protrusion 153 can extend in the third direction B that is perpendicular to the first direction A, and the third protrusion 153 can intersect with one of the first protrusion 151 and the second protrusion 152. Alternatively, in this embodiment, the third protrusion 153 separately intersects with the first protrusion 151 and the second protrusion 152, and two ends of the third protrusion 153 extend beyond the edge of the second protrusion 152 in the third direction B.

In this embodiment, one third protrusion 153 is disposed in the first direction A and one third protrusion 153 is disposed in the third direction B. The two third protrusions 153 are arranged in a cross shape, and the two third protrusions 153 are respectively connected to the first protrusion 151 and the second protrusion 152 to improve structural strength of the protrusion structure 15.

In some embodiments, as shown in FIG. 4, the protrusion structure 15 further includes: a fourth protrusion 154. The fourth protrusion 154 is disposed between the two adjacent third protrusions 153. The fourth protrusion 154 intersects with the first protrusion 151 and the third protrusion 153. Alternatively, the fourth protrusion 154 intersects with the second protrusion 152 and the third protrusion 153. Alternatively, the fourth protrusion 154 intersects with the first protrusion 151, the second protrusion 152, and the third protrusion 153. For example, in this embodiment, there are two third protrusions 153 and two fourth protrusions 154. The two fourth protrusions 154 are designed in a cross shape on the bottom wall 13, and the two fourth protrusions 154 and the two third protrusions 153 are alternately arranged in a circumferential direction of the underbody protection plate 1 in the underbody protection plate 1. The fourth protrusion 154 passes through an intersection point of the two third protrusions 153 and is connected to the first protrusion 151 and the second protrusion 152. Disposing of the first protrusion 151 and the second protrusion 152 can be designed as needed, and one or both of the first protrusion 151 and the second protrusion 152 can be provided. The plurality of third protrusions 153 and the plurality of fourth protrusions 154 are arranged in a ' 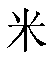 ' shape on the bottom wall 13. Therefore, disposing of the fourth protrusion 154 can facilitate improvement of strength of the protrusion structure 15, so that structural strength of the bottom wall 13 is more uniform and the bottom wall 13 has a stronger impact resistance.

In some embodiments, the underbody protection plate body 10 is rectangular. There are a plurality of first channel openings 12. The plurality of first channel openings 12 include a first sub-channel opening 121 and a second sub-channel opening 122. The first sub-channel opening 121 and the second sub-channel opening 122 are respectively located on same ends of two opposite sides of the sidewall 14. For example, the first sub-channel opening 121 and the second sub-channel opening 122 are both located at a same end of the underbody protection plate 1 in the third direction B, and the first sub-channel opening 121 and the second sub-channel opening 122 are located on two sides of the underbody protection plate 1 in the first direction A, with the first sub-channel opening 121 and the second sub-channel opening 122 facing each other. Therefore, arrangement of the first sub-channel opening 121 and the second sub-channel opening 122 can facilitate prompt discharge of liquid in the liquid discharge channel 11 and improve a rate at which the liquid flows out of the liquid discharge channel 11.

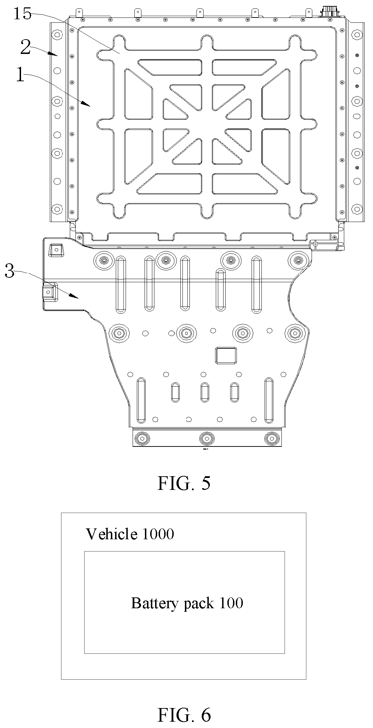

In some embodiments, as shown in FIG. 4 and FIG. 5, an edge of the underbody protection plate body 10 is provided with at least one connecting portion 16, and the connecting portion 16 is configured to connect to a protective plate 3 at the bottom of a vehicle. In this embodiment, the connecting portion 16 is disposed on a side of the underbody protection plate body 10 in the third direction B, and there are a plurality of connecting portions 16 and the plurality of connecting portions 16 are spaced apart in the first direction A. Here, the connecting portion 16 is used to connect to the protective plate 3 at the bottom of the vehicle, which saves bracket costs, optimizes space at the bottom of the vehicle, and improves assembly efficiency of the vehicle. The connecting portion 16 can be connected to the protective plate 3 by a bolt.

In some embodiments, as shown in FIG. 1 and FIG. 2, the underbody protection plate 1 further includes: a thermal insulation member 20. The thermal insulation member 20 is disposed on a first side of the underbody protection plate body 10 in the second direction C. The thermal insulation member 20 abuts against the protrusion structure 15. When the underbody protection plate 1 is mounted on the tray 2, the thermal insulation member 20 abuts between the protrusion structure 15 and the bottom of the tray 2. The thermal insulation member 20 can be connected to the protrusion structure 15 by means of bonding. In this embodiment, there are two thermal insulation members 20. The two thermal insulation members 20 are spaced apart in the first direction A, and a portion exposed between the two thermal insulation members 20 abuts against the bottom of the tray 2. A material of the thermal insulation member 20 may be microporous foamed polypropylene. Therefore, when the thermal insulation member 20 is disposed between the underbody protection plate 1 and the bottom of the tray 2, the thermal insulation member 20 is compressed and the thermal insulation member 20 has a compression-based water blocking function, so that liquid entering the protective plate 3 does not flow into the protrusion structure 15, or accumulated liquid entering the protrusion structure 15 can also flow from the second liquid discharge channel 112 or the third liquid discharge channel 113 to the first liquid discharge channel 111, which facilitates outflow of the entered liquid from the first channel opening 12 after flowing into the liquid discharge channel 11. In addition, deformation of the underbody protection plate 1 of the battery pack 100 caused by water impact can be effectively reduced.

Optionally, with reference to FIG. 2, the underbody protection plate 1 further includes: a buffer layer 30. The buffer layer 30 is disposed on a second side of the underbody protection plate body 10 in the second direction C. The second side and the first side are respectively located on two sides of the underbody protection plate body 10 in the second direction C. The buffer layer 30 can be sprayed onto and bonded to a side of the underbody protection plate 1 that is away from the thermal insulation member 20, namely the second side, to improve structural strength of the underbody protection plate 1.

A battery pack 100 according to an embodiment of a second aspect of this application includes: a tray 2 and an underbody protection plate 1. The underbody protection plate 1 is the underbody protection plate 1 according to any one of the foregoing embodiments. The underbody protection plate 1 is disposed at the bottom of the tray 2. A side, on which a liquid discharge channel 11 is located, of an underbody protection plate body 10 of the underbody protection plate 1 faces the tray 2.

With reference to FIG. 1 to FIG. 5, the underbody protection plate 1 is disposed at the bottom of the tray 2 to increase protection of the battery pack 100 and prevent accumulated water at the bottom of the tray 2 from corroding the tray 2. The underbody protection plate 1 is provided with a protrusion structure 15 on a side close to the tray 2 in the second direction C (namely the thickness direction of the underbody protection plate 1). The protrusion structure 15 includes a plurality of first protrusions 151, a plurality of second protrusions 152, a plurality of third protrusions 153, and a plurality of fourth protrusions 154. The plurality of first protrusions 151 and the plurality of second protrusions 152 form a plurality of nested square shapes on a bottom wall 13 to strengthen a structure. The plurality of third protrusions 153 and the plurality of fourth protrusions 154 form a plurality of ' 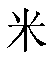 ' shapes on the bottom wall 13 to strengthen the structure. The plurality of first protrusions 151, the plurality of second protrusions 152, the plurality of third protrusions 153 and the plurality of fourth protrusions 154 are connected to improve structural strength of the underbody protection plate body 10. The protrusion structure 15 protrudes from a side of the bottom wall 13 of the underbody protection plate body 10 that is away from the tray 2 toward a side adjacent to the tray 2. A thermal insulation member 20 is bonded to the protrusion structure 15. The thermal insulation member 20 is disposed between the underbody protection plate 1 and the tray 2, and can prevent liquid entering the underbody protection plate 1 from flowing to the protrusion structure 15, so that the liquid flows to the liquid discharge channel 11 and flows out from the first channel opening 12. A buffer layer 30 is sprayed onto a side of the underbody protection plate 1 that is away from the tray 2, which can improve deformation resistance of the underbody protection plate 1 and increase wear resistance of the underbody protection plate 1.

In the battery pack 100 according to this embodiment of this application, the liquid discharge channel 11 and the channel opening 120 are provided on the underbody protection plate 1, so that the liquid entering the underbody protection plate 1 can promptly flow out from the first channel opening 12, which reduces a risk of water accumulation on the underbody protection plate 1 and reduces deformation of the bottom of the battery pack 100 caused by impact of accumulated water on the underbody protection plate 1, avoids corrosion of the tray 2, and increases use safety of the battery pack 100. In addition, the underbody protection plate 1 is integrated with a connecting portion 16 for mounting the protective plate 3 to protect the vehicle chassis, which can save on brackets and optimize space under the vehicle.

A vehicle 1000 according to an embodiment of a third aspect of this application includes the battery pack 100 according to the foregoing embodiment, as shown in FIG. 6.

In the vehicle 1000 according to this embodiment of this application, the underbody protection plate 1 is disposed at the bottom of the battery pack 100, so that structural strength of the underbody protection plate 1 can be increased, the underbody protection plate 1 can better protect the tray 2 of the battery pack 100 and a battery in the tray 2. A protrusion structure 15 stamped on the underbody protection plate 1 can improve ground clearance of the vehicle 1000, improving safety of the vehicle 1000.

In the descriptions of this application, it will be understood that orientations or positional relationships indicated by the terms "center", "longitudinal", "transverse", "length", "width", "thickness" "upper", "lower", "front", "rear", "left", "right", "vertical", "horizontal", "top", "bottom", "inner", "outer", "clockwise", "anticlockwise", "axial", "radial", "circumferential", and the like are orientations or positional relationships as shown in the accompanying drawings, and are only for the purpose of facilitating and simplifying the descriptions of this application instead of indicating or implying that apparatuses or elements indicated must have particular orientations, and be constructed and operated in the particular orientations, so that these terms are not construed as limiting This application.

In description of this application, a "first feature" or a "second feature" may include one or more such features. In description of this application, "a plurality of" means two or more. In description of this application, the first feature beings "above" or "below" the second feature may include that the first feature is in direct contact with the second feature, or may include that the first feature and second feature are not in direct contact but are in contact via another feature between them. In description of this application, the first feature being "over", "above", or "on" the second feature may include that the first feature is directly above or diagonally above the second feature, or simply means that the first feature has a higher horizontal height than the second feature.

In the description of this specification, descriptions referring to the terms "one embodiment", "some embodiments", "exemplary embodiments", "examples", "specific examples" or "some examples" mean that specific features, structures, materials or characteristics described in connection with this embodiment or example are included in at least one embodiment or example of this application. In this specification, the schematic representations of the foregoing terms are not necessarily aimed at the same embodiment or example.

Although the embodiments of this application have been shown and described, persons of ordinary skill in the art will understand that many changes, modifications, substitutions and variations can be made to these embodiments without departing from the principles and purposes of this application, and the scope of this application is defined by the claims and their equivalents.

## Claims

1. An underbody protection plate (1), comprising:
an underbody protection plate body (10), wherein the underbody protection plate body (10) is provided with a liquid discharge channel (11), at least one channel opening (120) in communication with the outside is formed on the underbody protection plate body (10), and the channel opening (120) is in communication with the liquid discharge channel (11).

2. The underbody protection plate (1) according to claim 1, wherein the underbody protection plate body (10) comprises:
a bottom wall (13); and
a sidewall (14), wherein the sidewall (14) is disposed on an outer periphery of the bottom wall (13), the sidewall (14) extends in a first direction toward a direction away from the bottom wall (13) and the sidewall (14) protrudes from the bottom wall (13) toward a second direction, the second direction is perpendicular to the first direction, the sidewall (14) and the bottom wall (13) jointly define the liquid discharge channel (11); and
at least one portion of the sidewall (14) is broken to form the channel opening (120).

3. The underbody protection plate (1) according to claim 2, wherein a protrusion structure (15) is disposed on the bottom wall (13), the protrusion structure (15) is spaced apart from the sidewall (14), and the protrusion structure (15) is formed by a portion of the bottom wall (13) that protrudes toward the second direction.

4. The underbody protection plate (1) according to claim 3, wherein the liquid discharge channel (11) comprises a first liquid discharge channel (111), and the first liquid discharge channel (111) is provided between the sidewall (14) and the protrusion structure (15); and
the channel opening (120) comprises a first channel opening (12), and the first channel opening (12) comprises at least one notch of the sidewall (14).

5. The underbody protection plate (1) according to claim 4, wherein the protrusion structure (15) comprises:
at least one first protrusion (151), and the first protrusion (151) annularly extends along the circumference of the bottom wall (13).

6. The underbody protection plate (1) according to claim 5, wherein the liquid discharge channel (11) comprises a second liquid discharge channel (112), and the second liquid discharge channel (112) is provided in a space surrounded by the first protrusion (151); and
the channel opening (120) comprises a second channel opening, the second channel opening comprises at least one notch of the first protrusion (151), and the second channel opening is in communication with the first liquid discharge channel (111) and the second liquid discharge channel (112).

7. The underbody protection plate (1) according to claim 5 or 6, wherein the protrusion structure (15) further comprises:
at least one second protrusion (152), the second protrusion (152) annularly extends in a circumferential direction of the bottom wall (13), and the second protrusion (152) is disposed between the first protrusion (151) and the sidewall (14).

8. The underbody protection plate (1) according to claim 7, wherein the liquid discharge channel (11) comprises a third liquid discharge channel (113), the third liquid discharge channel (113) is provided between the second protrusion (152) and the first protrusion (151); and
the channel opening (120) comprises a third channel opening, the third channel opening comprises at least one notch of the second protrusion (152), and the third channel opening is in communication with the first liquid discharge channel (111) and the third liquid discharge channel (113).

9. The underbody protection plate (1) according to claim 7 or 8, wherein the protrusion structure (15) further comprises: a third protrusion (153), the third protrusion (153) extends in the first direction, the third protrusion (153) intersects with the first protrusion (151) and/or the second protrusion (152); and/or
the third protrusion (153) extends in a third direction, the third protrusion (153) intersects with the first protrusion (151) and/or the second protrusion (152), and the first direction, the second direction, and the third direction are orthogonal to each other.

10. The underbody protection plate (1) according to claim 9, wherein the protrusion structure (15) further comprises: a fourth protrusion (154), and the fourth protrusion (154) intersects with the first protrusion (151) and the third protrusion (153); or
the fourth protrusion (154) intersects with the second protrusion (152) and the third protrusion (153); or
the fourth protrusion (154) intersects with the first protrusion (151), the second protrusion (152), and the third protrusion (153).

11. The underbody protection plate (1) according to any one of claims 4 to 10, wherein the underbody protection plate body (10) is rectangular; and
there are a plurality of first channel openings (12), and the plurality of first channel openings (12) comprise a first sub-channel opening (121) and a second sub-channel opening (122), and the first sub-channel opening (121) and the second sub-channel opening (122) are respectively located on same ends of two opposite sides of the sidewall (14).

12. The underbody protection plate (1) according to any one of claims 1 to 11, wherein an edge of the underbody protection plate body (10) is provided with at least one connecting portion (16), and the connecting portion (16) is configured to connect to a protective plate (3) at the bottom of a vehicle.

13. The underbody protection plate (1) according to any one of claims 1 to 12, wherein the underbody protection plate (1) further comprises:
a thermal insulation member (20), wherein the thermal insulation member (20) is disposed on a first side of the underbody protection plate body (10) in the second direction; and
a buffer layer (30), wherein the buffer layer (30) is disposed on a second side of the underbody protection plate body (10) in the second direction, the second side and the first side are respectively located on two sides of the underbody protection plate body (10) in the second direction, and
the buffer layer (30) is sprayed onto the second side of the underbody protection plate body (10).

14. A battery pack (100), comprising:
a tray (2); and
an underbody protection plate (1), wherein the underbody protection plate (1) is the underbody protection plate (1) according to any one of claims 1 to 13, the underbody protection plate (1) is disposed at the bottom of the tray (2), and a side, on which the liquid discharge channel (11) is located, of the underbody protection plate body (10) of underbody protection plate (1) faces the tray (2).

15. A vehicle (1000), comprising the battery pack (100) according to claim 14.
